# EUROPEAN PATENT SPECIFICATION

(11) **EP 4 198 456 B1**
(45) Date of publication and mention of the grant of the patent: **13.08.2025**
(21) Application number: 21214219.4
(22) Date of filing: 14.12.2021
(51) Int. Cl.: G01C 21/36, B60W 30/06, B62D 15/02, G01C 21/00, B60K 35/10, B60K 35/28, B60K 35/22, B60K 35/80

(54) **METHOD AND DEVICE FOR CONTROLLING AN AUTOMATED VEHICLE**
VERFAHREN UND VORRICHTUNG ZUR STEUERUNG EINES AUTOMATISIERTEN FAHRZEUGS
PROCÉDÉ ET DISPOSITIF POUR COMMANDER UN VÉHICULE AUTOMATISÉ

(43) Date of publication of application: 21.06.2023
(73) Proprietor: Bayerische Motoren Werke Aktiengesellschaft, 80809 München (DE)
(72) Inventor: Bilra, Manjeet Singh, 85457 Hörlkofen (Wörth) (DE); Abdelhameed, Mohamed-Saad, 85221 Dachau (DE)

(56) References cited:
- US-A1- 2019 371 175
- US-A1- 2021 140 780
- US-A1- 2021 254 983
- US-A1- 2021 325 207

## Description

The present invention is directed to a method for navigating an automated vehicle, to a corresponding automated vehicle, to a corresponding computer program, and to a corresponding computer-readable medium.

US 2019/371175 A1 describes a server related to receiving a parking request from a mobile device associated with a vehicle, receiving sensor data from sensors of the vehicle, generating a fusion map based at least on the sensor data, detecting one or more parking spaces within a pre-defined distance from the vehicle based on the fusion map, receiving, from the mobile device, a selection of one of the detected parking spaces in response to sending information corresponding to the detected parking spaces to the mobile device, generating a parking trajectory corresponding to the selected parking space, and transmitting, to the vehicle, the parking trajectory to enable an automated parking procedure by the vehicle.

US 2021/254983 A1 describes an online system building a high-definition map for a geographical region based on sensor data captured by a plurality of autonomous vehicles driving through a geographical region. The autonomous vehicles detect map discrepancies based on differences in the surroundings observed using sensor data compared to the high-definition map and send messages describing these map discrepancies to the online system. The online system updates existing occupancy maps to improve the accuracy of the occupancy maps.

US 2021/140780 A1 describes a navigation apparatus, including a detector configured to sense a vehicle state and a travelling environment during travelling, and a processor configured to recognize a drive context based on the vehicle state and the travelling environment, and to make an individualization map to be serviced based on the recognized drive context.

US 2021/325207 A1 describes a map updating method. An autonomous driving vehicle sends a local map request to a server, wherein the local map request includes current location data of the vehicle. The vehicle receives a first local map of the current location from the server, wherein the first local map covers a first distance on the route of the vehicle, a sensor mounted on the vehicle collects first surrounding environment data of the vehicle during travelling along the first distance, and based on the first local map and the first surrounding environment data, the vehicle generates map update data and sends the data to the server.

US 2012/282065 A1 is directed to a system for periodically charging an electrically powered automated guided vehicle includes a charging station positioned adjacent a predetermined route of the automated guided vehicle. The charging station includes a charging arm which is selectively movable between a stowed position and a charge position in which the charging arm engages with the automated guided vehicle to perform a charging operation. The charging station is dimensioned and positioned so as to be positioned underneath a bottom surface of a platform connected to the automated guided vehicle and between a side edge of the platform and the automated guided vehicle.

However, the state of the art does not ensure that a charging station, which should be present, e.g., according to map data, is present at a predefined location.

In the light of this prior art, one object of the present invention is to provide a device and/or a method being suitable for overcoming at least the above-mentioned disadvantages of the prior art, respectively.

The object is solved by the features of the independent claim. The dependent claims have preferred further embodiments of the invention as their subject matter.

More specifically, the object is solved by a method for navigating an automated vehicle, the automated vehicle comprising a human interface device comprising an interior display.

The method comprises determining a target position of a predefined infrastructure element in an environment of the automated vehicle using map data and an actual position of the automated vehicle, and checking the presence of the infrastructure element at the target position using a sensor system of the automated vehicle and an object detection algorithm configured to detect the infrastructure element based on sensor data captured by the sensor system.

If a result of checking the presence of the infrastructure element is positive, the method comprises creating a map based on the map data where the infrastructure element is included.

The method further comprises displaying the map using the interior display to a user of the automated vehicle.

User interfaces are composed of one or more layers, including a human machine interface (HMI) that interfaces machines with physical input hardware, and output hardware. A device that implements a human machine interface is called a human interface device (HID).

The interior display or display unit/system may comprise a head-up display and/or one or more displays installed at or near a dashboard of the vehicle. The interior display may comprise a liquid crystal (LC) display, an organic light emitting diode (OLED) display and/or a light emitting diode (LED) display.

The target position of the predefined infrastructure element is the position where the predefined infrastructure element should be according to the map data.

The environment of the vehicle may be an area or a region around the vehicle having a predefined size, where this size may be a fixed size or may change with respect to a position and/or a velocity of the vehicle.

The map data may be data containing information, inter alia, about a location of streets and infrastructure elements. The actual position of the vehicle may be determined using an onboard position sensor of the vehicle, such as a GPS (Global Positioning System) sensor. The map data may be part of a navigation system of the vehicle. Such a (automotive) navigation system may be part of the vehicle controls used to find direction in the vehicle. The navigation system may use a satellite navigation device, e.g., being based on GPS, to get its position data, i.e., the current/actual position of the vehicle, which may then be correlated to a position on the map, i.e., relative to predefined infrastructure elements and roads/streets. When directions are needed routing can be calculated based on the correlated position and the information contained in the map data. On the fly infrastructure and traffic information may be used to adjust the determined route.

Using the map data for determining the target position of the predefined infrastructure elements together with checking the presence of the infrastructure element at the target position using a sensor system of the automated vehicle and an object detection algorithm configured to detect the infrastructure element based on sensor data captured by the sensor system increases the reliability of the method. That is, even if the map data is periodically updated there might be a mismatch between the map data and the real word, e.g., the map data may contain information about a charging station in the environment of the vehicle which was removed or is under construction. Using the sensor data an online, optionally real time, check of the map data may be carried out. The sensor system may comprise a LiDAR sensor and/or a camera. Any sensor setup including a radar sensor, a LiDAR sensor, a camera, especially a parking camera, is possible. The object detection algorithm may be based on artificial intelligence.

Since the method comprises creating a (visual) map based on the map data where the infrastructure element is displayed, if (preferably only if) a result of checking the presence of the infrastructure element is positive and displaying the created map using the interior display to a user of the automated vehicle, the user is not confronted with infrastructure elements that are not really in his environment. Thereby, a workload for the user may be reduced when selecting to which infrastructure element the vehicle should be navigated. Moreover, a computing power of the system is lowered since only the infrastructure elements that a really present in the environment of the vehicle are included in the displayed map, i.e., highlighted in the displayed map and/or represented by a specific icon associated with the predefined infrastructure element.

In the following, preferred implementations of the method are described in detail.

The human interface device comprises an user input unit, such as a touch screen included in the interior display. The method further comprises determining a presence of a predefined user input at the user input unit in response to displaying the map to the user, e.g., checking if the user selected the predefined infrastructure element by touching the touch screen at a position where the predefined infrastructure element is displayed. If (preferably only if) the presence of the predefined user input is determined, the automated vehicle is navigated automated to the predefined infrastructure element.

Navigating the automated vehicle automated to the predefined infrastructure element may comprise controlling the longitudinal and/or lateral guidance of the vehicle such that the vehicle drives to the selected predefined infrastructure element without the need of help of the user.

The method further comprises, during navigating to the predefine infrastructure element, sending a request from the automated vehicle to the predefined infrastructure element to establish a communication with the predefined infrastructure element when a distance between the automated vehicle and the predefined infrastructure element is below a predefined threshold to check if the selected infrastructure element is working and/or available.

The method may further comprise activating a parking brake of the automated vehicle after navigating to the predefined infrastructure element.

The method may further comprise, after navigating to the predefined infrastructure element, using a service for the automated vehicle, such as charging the vehicle, provided by the predefined infrastructure element and optionally paying for the used service using an automatic payment function of the predefined infrastructure element via the human interface device directly from the vehicle avoiding any payments to be done at the predefined infrastructure element such as a at petrol station or charging station, or a parking fee at a parking station.

The method may further comprise, after navigating to the predefined infrastructure element, navigating the automated vehicle automated back to a previous position of the automated vehicle using a trajectory used for navigating the automated vehicle to the predefined infrastructure element.

The predefined infrastructure element may be a petrol station, a charging station for, optionally electrically, charging the automated vehicle or a parking lot.

Moreover, the method is not limited to one predefined infrastructure element, but multiple predefined infrastructure elements can be used. That is, the method for controlling the automated vehicle, the automated vehicle comprising a human interface device comprising an interior display, may comprise determining a respective target position of multiple or all predefined infrastructure elements in an environment of the automated vehicle using map data and an actual position of the automated vehicle, and checking the presence of the determined respective infrastructure element at the respective target position using a sensor system of the automated vehicle and an object detection algorithm configured to detect the respective infrastructure element based on sensor data captured by the sensor system. If a result of checking the presence of the respective infrastructure element is positive, the method comprises creating a map based on the map data where the respective infrastructure element is displayed. The method further comprises displaying the map using the interior display to a user of the automated vehicle.

The above described may be summarized in other words and with respect to one solely exemplary implementation thereof as follows.

The automated vehicle, e.g., an automated car, may use GPS data to localize a real time position of the vehicle in a map.

The map may then comprise the current vehicle position and may be used for searching all nearby infrastructure and services, such as charging stations, petrol stations and parking fees stations.

The on-board sensors of the vehicle, such as a front camera and/or parking cameras, may provide an overview of the given infrastructure such as different charging stations and charging ports and their location.

The data of the sensors is fused together with the map data to create a visual map including or example several spots for parking, charging or petrol filling on all sides of the vehicle (i.e., front, back, left and right hand of the vehicle).

The visual map may be provided to the user/customer, wherein the user can choose one of the spots, e.g., being located either in longitudinal or lateral direction of the vehicle and in front or behind the vehicle, using a human machine interface of the (ego) vehicle.

As soon as the user selects one spot displayed in the human machine interface, the vehicle may take over driving, steering and braking controls and start navigating automatically without driver's intervention towards the selected spot.

As the vehicle is coming close to the selected spot, e.g., infrastructure including utilities, the vehicle may send a request to establish a communication with the infrastructure using V2X or DSRC or any suitable communication protocol, e.g., using the drivers/vehicles cellular services or by using WiFi according to IEEE 802.11, respectively.

After reaching the spot/target location the vehicle may stop and activate a parking brake to ensure the vehicle is in standstill.

The vehicle may provide the option to the user to pay seamlessly via the human machine interface using automatic payment for the services and utilities provided at the spot.

The vehicle may also provide an option to drive automatically with longitudinal and or lateral vehicle controls backward using the previously used trajectory in-case the vehicle needs to be driven in reverse direction.

In conclusion, a new comfort function for a user of an automated vehicle, such as a car, where the vehicle maneuvers automatically towards infrastructure to and park itself at an user specified infrastructure element location such as a charging station for an electric vehicle or a petrol station for a vehicle with an internal combustion engine. The vehicle may also provide a means to choose a location of the infrastructure element based on the user's preference, i.e., when a plurality of infrastructure elements is detected in the environment of the vehicle, the user may select one or more of these infrastructure elements. Therefore, the maneuvering and parking of the vehicle near to the infrastructure element, which could be challenging for some users, may be automated. Moreover, the time-consuming payment of the services, where the user has to wait until the service provided by the infrastructure element is done and then has to go to the required payment place to pay for the service, may be automated. That is, the vehicle may ensure a communication with the infrastructure element, e.g., using V2X (Vehicle-to-everything) and/or the DSRC (Dedicated Short Range Communication) or any other suitable communication protocol to enable automatic payment of the services such as electric vehicle charging fees or petrol filling fees.

Furthermore, a data processing system is provided. The data processing system comprises means for carrying out the above-described method at least partly.

The data processing system can be a control unit, optionally an electronic control unit (ECU), for a vehicle. The (electronic) control unit can be an intelligent processor-controlled unit that can communicate with other modules, optionally via a central gateway (CGW). The control unit can form part of the vehicle's onboard network via fieldbuses such as the CAN bus, LIN bus, MOST bus and/or FlexRay or via automotive Ethernet, optionally together with a telematics control unit. The electronic control unit may be configured to control functions relevant to a driving behavior of the vehicle, such as an engine control system, a power transmission, a braking system and/or a tire pressure control system. In addition, some or all driver assistance systems such as parking assistant, adaptive cruise control, lane departure warning, lane change assistant, traffic sign recognition, light signal recognition, approach assistant, night vision assistant, intersection assistant, and/or many others may be controlled by the control unit.

Moreover, the description given above with respect to the method applies mutatis mutandis to the data processing system and vice versa.

Furthermore, an automated vehicle comprising the above-described data processing system is provided.

The automated vehicle may be an automobile, e.g., a car. The automated vehicle can be designed to take over lateral and/or longitudinal guidance at least partially and/or temporarily during automated driving of the automated vehicle.

The automated driving may be such that the driving of the vehicle is (largely) autonomous.

The vehicle may be a vehicle of autonomy level 1, i.e., have certain driver assistance systems that support the driver in vehicle operation, for example adaptive cruise control (ACC).

The vehicle can be a vehicle of autonomy level 2, i.e., be partially automated in such a way that functions such as automatic parking, lane keeping or lateral guidance, general longitudinal guidance, acceleration and/or braking are performed by driver assistance systems.

The vehicle may be an autonomy level 3 vehicle, i.e., automated in such a conditional manner that the driver does not need to continuously monitor the system vehicle. The motor vehicle autonomously performs functions such as triggering the turn signal, changing lanes, and/or lane keeping. The driver can attend to other matters but is prompted by the system to take over control within a warning time if needed.

The vehicle may be an autonomy level 4 motor vehicle, i.e., so highly automated that the driving of the vehicle is permanently taken over by the system vehicle. If the driving tasks are no longer handled by the system, the driver may be requested to take over control.

The vehicle may be an autonomy level 5 vehicle, i.e., so fully automated that the driver is not required to complete the driving task. No human intervention is required other than setting the destination and starting the system. The vehicle can operate without a steering wheel or pedals.

Moreover, the description given above with respect to the method and the data processing system applies mutatis mutandis to the vehicle and vice versa.

Furthermore, a computer program may be provided, the computer program comprising instructions which, when the program is executed by a computer, cause the computer to carry out the above-described method at least partly.

The program may comprise any program code, in particular a code suitable for control systems of vehicles. The description given above with respect to the method, the data processing system and the vehicle applies mutatis mutandis to the computer program and vice versa.

Furthermore, computer-readable medium may be provided, the computer-readable medium comprising instructions which, when executed by a computer, cause the computer to carry out the above-described method at least partly.

The computer-readable medium may be any digital data storage device, such as a USB flash drive, a hard disk, a CD-ROM, an SD card, or an SSD card. The above-described computer program may be stored on the computer-readable medium. However, the computer program does not necessarily have to be stored on such a computer-readable medium but can also be obtained via the Internet.

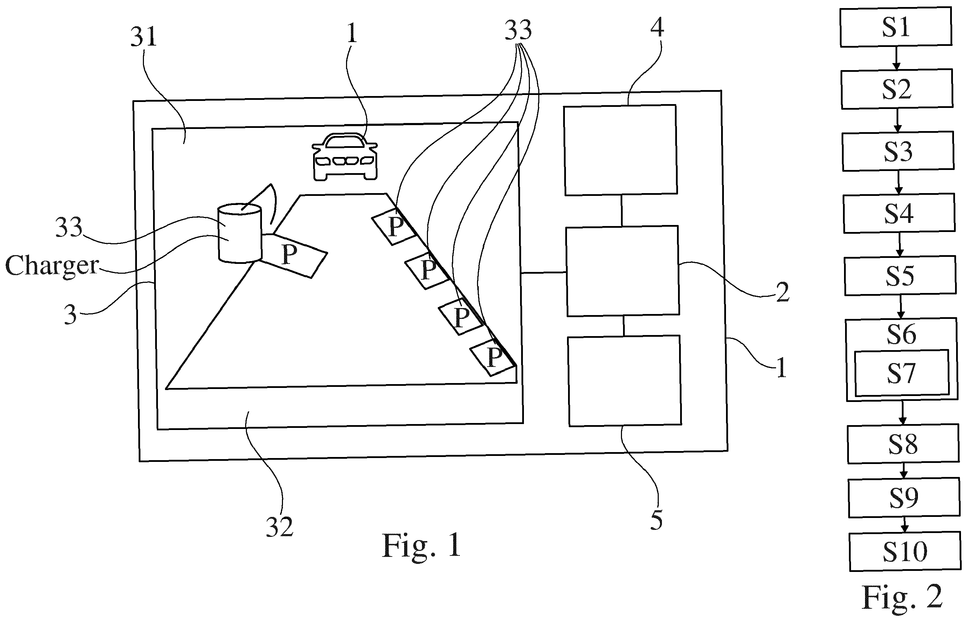

An embodiment is described with reference to figures 1 and 2 below.
- Fig. 1: shows schematically an automated vehicle comprising a control unit configured to carry out a method for controlling the automated vehicle, and
- Fig. 2: shows schematically a flowchart of the method.

In the following an embodiment is described with reference to figures 1 and 2, wherein the same reference signs are used for the same objects throughout the description of the figures and wherein the embodiment is just one specific example for implementing the invention and does not limit the scope of the invention as defined by the claims.

As can be gathered from figure 1, which solely schematically shows an automated vehicle 1, the vehicle 1 comprises a control unit 2, a human interface device 3 with an interior display 31 and an user input unit 32, a data storage 4, and a sensor system 5. The control unit 2 is connected to the human interface device 3 as well as to the data storage 4 and the sensor system 5.

Using the above-described components, the automated vehicle 1 is configured to carry out a method for controlling the automated vehicle 1, wherein this method will be explained in detail below also with respect to figure 2 showing a flowchart of the method.

As can be gathered from figure 2, the method comprises substantially ten steps S1 - S10.

In a first step S1 of the method, the control unit 2 determines a target position of predefined infrastructure elements 33, such a charging stations and parking spots, in an environment of the automated vehicle using map data stored in the data storage 4 and an actual position of the automated vehicle 1 determined using the map data and a GPS sensor of the sensor system 5.

In a second step S2 of the method, the control unit 2 checks the presence of the infrastructure elements 33 included in the map data at the target position using the sensor system 5 of the automated vehicle 1 and an object detection algorithm configured to detect the infrastructure elements 33 based on sensor data captured by the sensor system 5. If the respective infrastructure element 33 is detected using the object detection algorithm at its respective target position, the check is positive for this respective infrastructure element 33 and the target position of this respective infrastructure element 33 is set to a correct position thereof.

In a third step S3 of the method, the control unit 2 creates a map based on the map data and includes all the infrastructure elements 33 for which the check in the second step S2 of the method was positive, such that these infrastructure elements 33 are included at its correct position, optionally relative to the vehicle 1.

In a fourth step S4 of the method, the map created in the third step S3 is displayed to a user of the automated vehicle 1 using the interior display 31 being controlled by the control unit 2.

This map is shown in figure 1, wherein the different infrastructure elements 33 are displayed using predefined icons, here a charging station on a left side of the display 31 and four parking spots on right side of the display 31. A second charging station, also located on the left side according to the map data, is not shown in figure 1 since this second charging station was not detected using the sensor data in the third step S3 of the method.

In a fifth step S5 of the method, the user input unit 32, here a touchscreen integrated into the display 31, determines a presence of a predefined user input in response to displaying the map to the user in the fourth step S4.

If the presence of the predefined user input is determined in the fifth step S5, i.e., if the user touches on one of the displayed infrastructure elements 33, the control unit 2 takes over the longitudinal and lateral guidance of the automated vehicle 1 and navigates the automated vehicle 1 automated to the selected infrastructure element 33 in a sixth step S6 of the method.

During navigating to the selected infrastructure element 33 in the sixth step S6, in a seventh step S7 of the method, the control unit 2 sends (using a not shown interface of the vehicle 1) a request from the automated vehicle 1 to the selected infrastructure element 33 to establish a communication with the selected infrastructure element 33 when a distance between the automated vehicle 1 and the selected infrastructure element 33 is below a predefined threshold to check if the predefined infrastructure element is working and/or available.

In an eight step S8 of the method, the method comprises activating a parking brake of the automated vehicle 1 by the control unit 2 after navigating to the selected infrastructure element 33.

In a ninth step S9 of the method, after navigating to the predefined infrastructure element, the method comprises using a service for the automated vehicle 1 provided by the selected infrastructure element 33 and optionally paying for the used service using an automatic payment function of the selected infrastructure element 33 via the human interface device 3.

In a tenth step S10 of the method, after navigating to the predefined infrastructure element, the method comprises navigating the automated vehicle 1 automated back to a previous position of the automated vehicle 1 using the previous trajectory used for navigating the automated vehicle to the selected infrastructure element 33 controlled by the control unit 2.

### Reference signs

- 1: automated vehicle
- 2: control unit
- 3: human interface device
- 31: interior display
- 32: user input unit
- 33: predefined infrastructure elements
- 4: data storage
- 5: sensor system
- S1 - S10: steps of the method

## Claims

1. Method for navigating an automated vehicle (1), the automated vehicle (1) comprising a human interface device (3) comprising an interior display (31), wherein the method comprises:
- determining (S1) a target position of a predefined infrastructure element (33) in an environment of the automated vehicle (1) using map data and an actual position of the automated vehicle (1),
- checking (S2) the presence of the infrastructure element (33) at the target position using a sensor system (5) of the automated vehicle (1) and an object detection algorithm configured to detect the predefined infrastructure element (33) based on sensor data captured by the sensor system (5),
- if a result of checking the presence of the predefined infrastructure element (33) is positive, creating (S3) a map based on the map data where the predefined infrastructure element (33) is included,
- displaying (S4) the map using the interior display (31) to a user of the automated vehicle (1),
- determining (S5) a presence of a predefined user input at a user input unit (32) comprised by the human interface device (3) in response to displaying the map to the user, and
- if the presence of the predefined user input is determined, navigating (S6) the automated vehicle (1) automatically to the predefined infrastructure element (33),
**characterized in that**
the method further comprises, during navigating (S6) to the predefined infrastructure element, sending (S7) a request from the automated vehicle (1) to the predefined infrastructure element (33) to establish a communication with the predefined infrastructure element (33) when a distance between the automated vehicle (1) and the predefined infrastructure element (33) is below a predefined threshold to check if the predefined infrastructure element (33) is working and/or available.

2. Method according to claim 1, wherein the method further comprises activating (S8) a parking brake of the automated vehicle (1) after navigating (S6) to the predefined infrastructure element (33).

3. Method according to claim 1 or 2, wherein the method further comprises, after navigating (S6) to the predefined infrastructure element (33), using (S9) a service for the automated vehicle (1) provided by the predefined infrastructure element 33, optionally charging the automated vehicle (1), and optionally paying for the used service using an automatic payment function of the predefined infrastructure element (33) via the human interface device (3).

4. Method according to any of claims 1 to 3, wherein the method further comprises, after navigating (S6) to the predefined infrastructure element (33), navigating (S10) the automated vehicle (1) automatically back to a previous position of the automated vehicle (1) using a trajectory used for navigating (S6) the automated vehicle (1) to the predefined infrastructure element (33).

5. Method according to any of claims 1 to 4, wherein the predefined infrastructure element (33) is a petrol station, a charging station for, optionally electrically, charging the automated vehicle or a parking lot.

6. An automated vehicle (1) comprising a control unit (2), a human interface device (3) with an interior display (31) and an user input unit (32), a data storage (4), and a sensor system (5), the automated vehicle (1) being configured to carry out the method according to any of claims 1 to 5.

7. A computer program comprising instructions to cause the automated vehicle (1) of claim 6 to carry out the method according to any of claims 1 to 5.

8. A computer-readable medium comprising instructions to cause the automated vehicle (1) of claim 6 to carry out the method according to any of claims 1 to 5.

## Patentansprüche

1. Verfahren zum Navigieren eines automatisierten Fahrzeugs (1), wobei das automatisierte Fahrzeug (1) eine Benutzerschnittstelleneinrichtung (3) umfasst, die eine Innenanzeige (31) umfasst, wobei das Verfahren umfasst:
• Bestimmen (S1) einer Zielposition eines vordefinierten Infrastrukturelements (33) in einer Umgebung des automatisierten Fahrzeugs (1) unter Verwendung von Kartendaten und einer aktuellen Position des automatisierten Fahrzeugs (1),
• Überprüfen (S2) des Vorhandenseins des Infrastrukturelements (33) an der Zielposition unter Verwendung eines Sensorsystems (5) des automatisierten Fahrzeugs (1) und eines Objekterkennungsalgorithmus, der konfiguriert ist, um das vordefinierte Infrastrukturelement (33) basierend auf vom Sensorsystem (5) erfassten Sensordaten zu erkennen,
• wenn ein Ergebnis der Überprüfung des Vorhandenseins des vordefinierten Infrastrukturelements (33) positiv ist, Erstellen (S3) einer Karte basierend auf den Kartendaten, wobei das vordefinierte Infrastrukturelement (33) einbezogen ist,
• Anzeigen (S4) der Karte unter Verwendung der Innenanzeige (31) für einen Benutzer des automatisierten Fahrzeugs (1),
• Bestimmen (S5) eines Vorhandenseins einer vordefinierten Benutzereingabe an einer Benutzereingabeeinheit (32), die von der Benutzerschnittstelleneinrichtung (3) umfasst wird, als Reaktion auf das Anzeigen der Karte für den Benutzer, und
• wenn das Vorhandensein der vordefinierten Benutzereingabe bestimmt wird, automatisches Navigieren (S6) des automatisierten Fahrzeugs (1) zu dem vordefinierten Infrastrukturelement (33),
**dadurch gekennzeichnet, dass** das Verfahren ferner während des Navigierens (S6) zu dem vordefinierten Infrastrukturelement umfasst, das Senden (S7) einer Anfrage vom automatisierten Fahrzeug (1) an das vordefinierte Infrastrukturelement (33), um eine Kommunikation mit dem vordefinierten Infrastrukturelement (33) herzustellen, wenn ein Abstand zwischen dem automatisierten Fahrzeug (1) und dem vordefinierten Infrastrukturelement (33) unter einem vordefinierten Schwellenwert liegt, um zu überprüfen, ob das vordefinierte Infrastrukturelement (33) funktioniert und/oder verfügbar ist.

2. Verfahren nach Anspruch 1, wobei das Verfahren ferner das Aktivieren (S8) einer Parkbremse des automatisierten Fahrzeugs (1) nach dem Navigieren (S6) zu dem vordefinierten Infrastrukturelement (33) umfasst.

3. Verfahren nach Anspruch 1 oder 2, wobei das Verfahren ferner umfasst, nach dem Navigieren (S6) zu dem vordefinierten Infrastrukturelement (33), das Verwenden (S9) eines Dienstes für das automatisierte Fahrzeug (1), der durch das vordefinierte Infrastrukturelement (33) bereitgestellt wird, optionales Aufladen des automatisierten Fahrzeugs (1) und optionales Bezahlen für den genutzten Dienst unter Verwendung einer automatischen Zahlungsfunktion des vordefinierten Infrastrukturelements (33) über die Mensch-Maschine-Schnittstelle (3).

4. Verfahren nach einem der Ansprüche 1 bis 3, wobei das Verfahren ferner umfasst, nach dem Navigieren (S6) zu dem vordefinierten Infrastrukturelement (33), automatisches Zurücknavigieren (S10) des automatisierten Fahrzeugs (1) zu einer vorherigen Position des automatisierten Fahrzeugs (1) unter Verwendung einer Trajektorie, die für das Navigieren (S6) des automatisierten Fahrzeugs (1) zu dem vordefinierten Infrastrukturelement (33) verwendet wurde.

5. Verfahren nach einem der Ansprüche 1 bis 4, wobei das vordefinierte Infrastrukturelement (33) eine Tankstelle, eine Ladestation zum optionalen elektrischen Aufladen des automatisierten Fahrzeugs oder ein Parkplatz ist.

6. Automatisiertes Fahrzeug (1), umfassend eine Steuereinheit (2), eine Benutzerschnittstelleneinrichtung (3) mit einer Innenanzeige (31) und einer Benutzereingabeeinheit (32), einen Datenspeicher (4) und ein Sensorsystem (5), wobei das automatisierte Fahrzeug (1) konfiguriert ist, um das Verfahren nach einem der Ansprüche 1 bis 5 durchzuführen.

7. Computerprogramm, umfassend Anweisungen, um das automatisierte Fahrzeug (1) nach Anspruch 6 zu veranlassen, das Verfahren nach einem der Ansprüche 1 bis 5 durchzuführen.

8. Computerlesbares Medium, umfassend Anweisungen, um das automatisierte Fahrzeug (1) nach Anspruch 6 zu veranlassen, das Verfahren nach einem der Ansprüche 1 bis 5 durchzuführen.

## Revendications

1. Procédé de navigation d'un véhicule automatisé (1), le véhicule automatisé (1) comprenant un dispositif d'interface homme-machine (3) comprenant un affichage intérieur (31),
le procédé comprenant:
• la détermination (S1) d'une position cible d'un élément d'infrastructure prédéfini (33) dans un environnement du véhicule automatisé (1) en utilisant des données cartographiques et une position réelle du véhicule automatisé (1),
• la vérification (S2) de la présence de l'élément d'infrastructure (33) à la position cible en utilisant un système de capteurs (5) du véhicule automatisé (1) et un algorithme de détection d'objets configuré pour détecter l'élément d'infrastructure prédéfini (33) sur la base des données de capteurs capturées par le système de capteurs (5),
• si un résultat de la vérification de la présence de l'élément d'infrastructure prédéfini (33) est positif, la création (S3) d'une carte basée sur les données cartographiques où l'élément d'infrastructure prédéfini (33) est inclus,
• l'affichage (S4) de la carte en utilisant l'affichage intérieur (31) à un utilisateur du véhicule automatisé (1),
• la détermination (S5) d'une présence d'une entrée utilisateur prédéfinie sur une unité d'entrée utilisateur (32) comprise par le dispositif d'interface homme-machine (3) en réponse à l'affichage de la carte à l'utilisateur, et
• si la présence de l'entrée utilisateur prédéfinie est déterminée, la navigation (S6) automatique du véhicule automatisé (1) vers l'élément d'infrastructure prédéfini (33), **caractérisé en ce que** le procédé comprend en outre, pendant la navigation (S6) vers l'élément d'infrastructure prédéfini, l'envoi (S7) d'une demande du véhicule automatisé (1) à l'élément d'infrastructure prédéfini (33) pour établir une communication avec l'élément d'infrastructure prédéfini (33) lorsqu'une distance entre le véhicule automatisé (1) et l'élément d'infrastructure prédéfini (33) est inférieure à un seuil prédéfini pour vérifier si l'élément d'infrastructure prédéfini (33) fonctionne et/ou est disponible.

2. Procédé selon la revendication 1, dans lequel le procédé comprend en outre l'activation (S8) d'un frein de stationnement du véhicule automatisé (1) après la navigation (S6) vers l'élément d'infrastructure prédéfini (33).

3. Procédé selon la revendication 1 ou 2, dans lequel le procédé comprend en outre, après la navigation (S6) vers l'élément d'infrastructure prédéfini (33), l'utilisation (S9) d'un service pour le véhicule automatisé (1) fourni par l'élément d'infrastructure prédéfini (33), éventuellement la recharge du véhicule automatisé (1), et éventuellement le paiement du service utilisé en utilisant une fonction de paiement automatique de l'élément d'infrastructure prédéfini (33) via le dispositif d'interface homme-machine (3).

4. Procédé selon l'une quelconque des revendications 1 à 3, dans lequel le procédé comprend en outre, après la navigation (S6) vers l'élément d'infrastructure prédéfini (33), la navigation (S10) automatique du véhicule automatisé (1) de retour à une position précédente du véhicule automatisé (1) en utilisant une trajectoire utilisée pour la navigation (S6) du véhicule automatisé (1) vers l'élément d'infrastructure prédéfini (33).

5. Procédé selon l'une quelconque des revendications 1 à 4, dans lequel l'élément d'infrastructure prédéfini (33) est une station-service, une station de recharge pour, éventuellement électriquement, recharger le véhicule automatisé ou un parking.

6. Véhicule automatisé (1) comprenant une unité de commande (2), un dispositif d'interface homme-machine (3) avec un affichage intérieur (31) et une unité d'entrée utilisateur (32), un stockage de données (4), et un système de capteurs (5), le véhicule automatisé (1) étant configuré pour exécuter le procédé selon l'une quelconque des revendications 1 à 5.

7. Programme informatique comprenant des instructions pour amener le véhicule automatisé (1) selon la revendication 6 à exécuter le procédé selon l'une quelconque des revendications 1 à 5.

8. Support lisible par ordinateur comprenant des instructions pour amener le véhicule automatisé (1) selon la revendication 6 à exécuter le procédé selon l'une quelconque des revendications 1 à 5.
